# EUROPÄISCHE PATENTSCHRIFT

(11) **EP 2 338 676 B1**
(45) Veröffentlichungstag und Bekanntmachung des Hinweises auf die Patenterteilung: **05.11.2014**
(21) Anmeldenummer: 10175800.1
(22) Anmeldetag: 08.09.2010
(51) Int. Cl.: B32B 3/12, B32B 21/00, B32B 37/06, B32B 37/12, B32B 37/14

(54) **Leichtbauplatte und Verfahren zu deren Herstellung**
Lightweight construction board and method for its production
Panneau de construction léger et procédé destiné à sa fabrication

(30) Priorität: 23.12.2009 DE 102009060531
(43) Veröffentlichungstag der Anmeldung: 29.06.2011
(73) Patentinhaber: Fritz Egger GmbH & Co. OG, 3105 Unterradlberg (AT)
(72) Erfinder: Riepertinger, Manfred, 83093, Bad Endorf (DE)
(74) Vertreter: Cohausz & Florack

(56) Entgegenhaltungen:
- EP-A1- 0 352 993
- EP-A1- 0 824 066
- WO-A1-02/087855
- WO-A1-2005/113230
- DE-A1-102008 022 805
- NL-A- 8 105 312
- US-A- 3 441 461
- US-A- 5 242 651
- US-A1- 2006 000 547

## Beschreibung

Die Erfindung betrifft eine Leichtbauplatte, die sich in einer Längsrichtung erstreckt, mit einer oberen Deckplatte und einer unteren Deckplatte aus einem Lignozellulose enthaltenden Material, die beide in Längsrichtung verlaufen, mit einer zwischen der oberen Deckplatte und der unteren Deckplatte in Längsrichtung verlaufenden leichten Mittellage, die eine Wabenstruktur aufweist, die Wabenkammern bildende Wände hat, wobei die Mittellage mit ihrer Oberseite mit der oberen Deckplatte und mit ihrer Unterseite mit der unteren Deckplatte unter Einsatz eines Klebemittels verklebt ist. Ferner betrifft die Erfindung ein entsprechendes Verfahren zur Herstellung einer Leichtbauplatte.

Leichtbauplatten weisen zwei Deckplatten auf, die aus Lignozellulose enthaltendem Material, meist einem Holzwerkstoff, wie einer Span-, Faser- oder OSB-Platte, bestehen. Zwischen den beiden Deckplatten ist eine sogenannte leichte Mittellage, die im Vergleich zu den Deckplatten ein geringeres Gewicht bzw. eine geringere Dichte aufweist, angeordnet. Mittellagen können auf verschiedene Weise ausgebildet sein. Beispielsweise handelt es sich dabei um eine Wabenstruktur, insbesondere Kartonwabenstruktur, oder eine geschäumte Lage. Die vorliegende Erfindung betrifft Leichtbauplatten mit einer Wabenstruktur als Mittellage.

US2006/0000547 A1 offenbart eine Leichtbauplatte mit einer wabenförmigen Mittellage, die an eine obere Deckplatte und eine untere Deckplatte aus einem Lignozellulose enthaltenden Material (Papier, Holzspanplatte usw.) mittels eines Klebemittels verklebt ist.

Problematisch ist hier besonders der Schritt des Verklebens von den Decklagen mit der wabenförmigen Mittellage. Insbesondere besteht das Problem, dass es schwierig ist, den eingesetzten Klebstoff zur Aushärtung zu bringen. Grundsätzlich bestehen dafür bislang drei Lösungsansätze:

Ein Lösungsansatz besteht in der Verwendung von physikalisch trocknenden Klebstoffsystemen bei langer Presszeit. Der Nachteil ist hier die lange Presszeit und damit die eingeschränkte Produktionskapazität.

Ein weiterer Lösungsansatz besteht in der Verwendung von hoch reaktiven Systemen. Nachteil ist einerseits der vergleichsweise hohe Preis und andererseits die schlechte Handhabung dieser Klebstoffsysteme, die regelmäßig eine intensive Reinigung der Herstellungsvorrichtung, insbesondere des Klebstoffauftragsystems, erfordern.

Schließlich besteht noch ein weiterer Lösungsansatz darin, mit Hilfe elektrischer Felder Energie in den Schichtaufbau aus oberer Deckplatte, Mittellage und unterer Deckplatte einzubringen. Der Nachteil ist hier der anlagentechnische Aufwand und die notwendige, teure elektrische Energie.

Die Anwendung von billigerer Wärmeenergie, die herkömmlich über die Presse eingebracht wird, ist bei Leichtbauplatten mit Decklagen aus einem Lignozellulose enthaltenden Material, insbesondere Holzwerkstoff, wie sie Gegenstand der vorliegenden Erfindung sind, nur eingeschränkt möglich, da Holzwerkstoffe in der Regel einerseits schlechte Wärmeleiter sind und andererseits nur einer eingeschränkten Wärmebeanspruchung standhalten können, also nicht für höhere Presstemperaturen geeignet wären. Zudem können die Decklagen beim Verpressen bereits fertig beschichtet sein, was in den meisten Fällen zusätzlich einer Wärmebeaufschlagung entgegensteht.

Aus dem Stand der Technik sind außerdem Wabenstege bzw. Wabenwände von Sechseckwaben bekannt, die je Wabenwand an der die obere bzw. untere Deckplatte berührenden Kante eine relativ kleine Ausnehmung haben, die dazu dient, dass beim Verpressen des die Leichtbauplatte bildenden Schichtaufbaus ein Druckausgleich zwischen den einzelnen Wabenkammern ermöglicht wird. Die Größe der Ausnehmungen ist, um die Stabilität der Leichtbauplatte nicht zu beeinflussen, gerade so groß gewählt, dass ein Luftaustausch zwischen benachbarten Kammern nur unter dem erhöhten Druck bedingt durch die Presskraft stattfindet.

Es ist daher die Aufgabe der vorliegenden Erfindung, eine Leichtbauplatte und ein entsprechendes Herstellungsverfahren anzugeben, das für eine verbesserte Verklebung sorgt.

Die zuvor hergeleitete und aufgezeigte Aufgabe wird gemäß einer ersten Lehre der vorliegenden Erfindung bei einer Leichtbauplatte, die sich in einer Längsrichtung erstreckt, mit einer oberen Deckplatte und einer unteren Deckplatte aus einem Lignozellulose enthaltenden Material, insbesondere einem Holzwerkstoff, vorzugsweise einer Span-, Faser- oder OSB-Platte, die beide in Längsrichtung verlaufen, mit einer zwischen der oberen Deckplatte und der unteren Deckplatte in Längsrichtung verlaufenden leichten Mittellage aus verpressten Holzpartikeln oder Karton, die eine Wabenstruktur aufweist, die Wabenkammern bildende Wände hat, wobei die Mittellage mit ihrer Oberseite mit der oberen Deckplatte und mit ihrer Unterseite mit der unteren Deckplatte unter Einsatz eines Klebemittels verklebt ist, dadurch gelöst, dass in zumindest einigen der die Wabenkammer begrenzenden Wände mindestens eine Durchbrechung vorgesehen ist, deren Querschnittsfläche so konfiguriert ist, dass die Durchbrechungen einen durch seitliches Anströmen der Leichtbauplatte von außerhalb der Leichtbauplatte zugeführten Luftstrom, insbesondere quer zur Längsrichtung (d.h. in Querrichtung), von einer Seitenkante der Leichtbauplatte ins Innere der Leichtbauplatte zulassen wobei die Gesamtquerschnittsfläche aller Durchbrechungen einer Wand in einem Bereich von 5 bis 50% bezogen auf die Gesamtfläche der Wand liegt. Erfindungsgemäß ist es auch denkbar, dass in den die mindestens eine Durchbrechung aufweisenden Wänden mehrere Durchbrechungen vorgesehen sind, deren Querschnittsfläche so konfiguriert ist, dass die Durchbrechungen einen von außerhalb der Leichtbauplatte zugeführten Luftstrom, insbesondere quer zur Längsrichtung oder einem stumpfen Winkel zur Längsrichtung, von einer Seitenkante der Leichtbauplatte ins Innere der Leichtbauplatte zulassen.

Diese Durchbrechungen in den Wänden, gemeint sind die seitlichen Begrenzungswände der Wabenstruktur, erlauben es einem insbesondere erwärmten Luftstrom über die Plattenkanten, gemeint sind die seitlichen und zur Produktionsbewegungsrichtung insbesondere parallelen Kanten der Leichtbauplatte, in diese einzuströmen, um so einem vergleichsweise kostengünstigen Klebstoff zu beschleunigter Aushärtung zu verhelfen. Insbesondere lassen die Durchbrechungen einen von außerhalb der Leichtbauplatte zugeführten Luftstrom, insbesondere quer zur Längsrichtung oder einem stumpfen Winkel zur Längsrichtung, von einer Wabenkammer in eine jeweils dazu benachbarte Wabenkammer zu.

Der Luftstrom gelangt durch die Durchbrechungen zumindest an den Rand einiger oder aller Kontaktflächen zwischen der Oberseite bzw. der Unterseite der Mittellage und der jeweils daran anliegenden Deckplatte. Die Aushärtzeit des Klebemittels wird zumindest an diesen Stellen deutlich gegenüber dem Stand der Technik verkürzt.

Wenn erfindungsgemäß, wie zuvor beschrieben, davon die Rede ist, dass die Querschnittsfläche, also insbesondere die Größe des Querschnitts, so konfiguriert ist, dass ein Luftstrom von außerhalb der Leichtbauplatte in ihr Inneres gelangt, dann ist damit gemeint, dass die Durchbrechungen nicht nur während der Fertigung der Leichtbauplatte einen solchen Luftstrom zulassen bzw. zugelassen haben, sondern dieser Luftstrom auch nachher noch bei der fertigen Leichtbauplatte, das heißt wenn das Klebemittel im Bereich der Kontaktflächen bereits zumindest teilweise ausgehärtet ist, noch möglich ist. Mit anderen Worten kann ein Luftstrom auch noch dann in die Leichtbauplatte eingeleitet werden, wenn diese bereits die Presse, in der der Schichtaufbau aus oberer Deckplatte, Mittellage und unterer Deckplatte verpresst wird, bereits passiert hat. Insbesondere ist die Querschnittsfläche der mindestens einen Durchbrechung aber so konfiguriert, dass die Durchbrechungen den Luftstrom auch im Zustand der maximalen Verpressung während des Verpressens des Schichtaufbaus aus oberer Deckplatte, Mittellage und unterer Deckplatte zulassen. Mit maximaler Verpressung ist der Zustand gemeint, bei dem die Presse den maximalen Druck, der bei der Herstellung der Leichtbauplatte vorgesehen ist, auf den Schichtaufbau ausübt. Die relativ kleinen aus dem Stand der Technik bekannten Ausnehmungen, die allein zum Druckausgleich zwischen den Wabenkammern im Moment des höchsten Drucks beim Verpressen dienen, sind nicht dazu geeignet, einen Luftstrom von außerhalb der Leichtbauplatte in ihr Inneres zu erlauben, insbesondere nicht, wenn die Leichtbauplatte lediglich seitlich mit dem Luftstrom angeströmt wird. Im Gegenteil, hierzu müsste die Luft unter hohem Druck in die Leichtbauplatte eingeleitet bzw. gepresst werden, was aber zu einer Beschädigung der Waben, insbesondere der vorderen Waben, führen würde. Insbesondere wäre auch nicht garantiert, dass die in die Leichtbauplatte gepresste Luft alle Wabenkammern erreichen würde. Die Gefahr, dass vordere Wabenkammern platzen würden, wäre relativ groß.

Gemäß einer weiteren Ausgestaltung der erfindungsgemäßen Leichtbauplatte sind einige Wände von Wabenkammern, die eine mindestens eine Durchbrechung aufweisende Wand aufweisen, frei von Durchbrechungen. Es ist also nicht zwingend erforderlich, dass jede der seitlichen Wabenkammerwände zum Durchleiten des Luftstroms geeignet ist. Im Gegenteil, wenn einige Wände keine Durchbrechungen aufweisen, gelangt dennoch der gewünschte Luftstrom in die Wabenkammer durch die eben mindestens eine Durchbrechung in einer der anderen Wände dieser Wabenkammer, gleichzeitig wird durch die durchbrechungsfreien Wände die Stabilität der Wabenstruktur und damit der Leichtbauplatte erhöht. Es ist zur Verbesserung der Stabilität der Leichtbauplatte sogar denkbar, in bestimmten Abschnitten der Mittellage, bezogen auf die Querrichtung (Richtung quer zur Längsrichtung), völlig auf Durchbrechungen zu verzichten. So können einige Wabenkammern ausschließlich Wände aufweisen, die frei von Durchbrechungen sind. In diese Wabenkammern kann dann zwar nicht der die Aushärtung des Klebemittels beschleunigende Luftstrom eindringen. Allerdings hat sich herausgestellt, dass es ausreicht, wenn die Mittellage nur in einigen Abschnitten, beispielsweise Randabschnitten, durch einen eingeleiteten Luftstrom, der die beschleunigte Aushärtung des Klebemittels bewirkt, an den Deckplatten vorfixiert wird, was wiederum erlaubt, dass die übrigen Bereiche auf herkömmliche Weise verklebt werden bzw. aushärten können. Dabei ist es denkbar, dass die Wabenkammern, die Wände mit mindestens einer Durchbrechung aufweisen, im Randbereich der Leichtbauplatte und die Wabenkammern, die ausschließlich Wände ohne Durchbrechungen aufweisen, außerhalb des Randbereichs, insbesondere im Zentrum, der Leichtbauplatte bezogen auf die Querrichtung, angeordnet sind. Sollte der Randbereich durch die Durchbrechungen nicht stabil genug sein, können hier nachträglich noch Riegel zwischen den Deckplatten als Teil der Mittellage eingesetzt werden, die den Randbereich zusätzlich verstärken.

Die jeweilige Mittellage der Leichtbauplatte kann auf verschiedene Weise ausgebildet und insbesondere geformt sein. Einige besonders vorteilhafte Ausgestaltungen, die trotz Anordnung von Durchbrechungen gleichzeitig eine hohe Stabilität aufweisen können, werden im Folgenden beschrieben.

Gemäß einer bevorzugten Ausgestaltung weist die Wabenstruktur sogenannte Sechseckwaben mit senkrechten Wänden, deren Stirnkanten an der oberen Deckplatte bzw. unteren Deckplatte zur Anlage kommen, auf. Eine solche Wabenstruktur wird auch als Bienenwabenstruktur bezeichnet. Eine solche Wabenstruktur besteht insbesondere aus mehreren die Wände bildenden Materialstreifen, die punktweise miteinander und versetzt zueinander verklebt sind, wobei sich benachbarte Materialstreifen nur an den miteinander verklebten Wänden berühren. Bevorzugt weisen die Wände, mit denen die Materialstreifen mit einem benachbarten Materialstreifen verklebt sind, keine Durchbrechungen auf. Durchbrechungen sind also vorzugsweise allenfalls dort vorgesehen, wo keine Klebeflächen sind. Auch eine solche Wabenstruktur hat sich trotz Durchbrechungen als sehr stabil erwiesen.

Bei den beiden letztgenannten Wabenstrukturen, also der als Schalentragwerk ausgebildeten und der als Bienenwabenstruktur ausgebildeten Wabenstruktur, ist es ferner denkbar, dass in den mindestens eine Durchbrechung aufweisenden Wänden entweder mindestens eine obere Durchbrechung, die nahe der Oberseite der Mittellage angeordnet ist, oder mindestens eine untere Durchbrechung, die nahe der Unterseite der Mittellage angeordnet ist, vorgesehen ist, wobei sich insbesondere in benachbarten Wänden und/oder Wabenkammern obere Durchbrechungen und untere Durchbrechungen jeweils abwechseln. Eine solche Verteilung der Durchbrechung bewirkt einerseits, dass der Luftstrom die Klebeflächen optimal erreicht. Andererseits ist eine maximale Stabilität und optimale Kraftverteilung innerhalb der Mittellage gewährleistet.

Gemäß wiederum einer weiteren Ausgestaltung der Leichtbauplatte haben die Durchbrechungen, unabhängig von der verwendeten Wabenstruktur, einen gebogenen, insbesondere runden oder elliptischen, oder einen eckigen, insbesondere schlitzförmigen, Querschnitt. Diese Querschnitte sorgen für eine optimale Durchleitung des Luftstroms, ohne die Stabilität nennenswert zu beeinflussen.

Für eine optimale Stabilität der Mittellage ist schließlich gemäß noch einer weiteren Ausgestaltung der erfindungsgemäßen Leichtbauplatte vorgesehen, dass die Gesamtquerschnittsfläche aller Durchbrechungen einer Wand höchstens 50%, bevorzugt höchstens 40%, besonders bevorzugt höchstens 30%, der Gesamtfläche der Wand einnimmt. Alternativ oder zusätzlich ist es auch denkbar, dass die Gesamtquerschnittsfläche aller Durchbrechungen einer Wand mindestens 5%, bevorzugt mindestens 10%, besonders bevorzugt mindestens 15%, der Gesamtfläche der Wand einnimmt, was den Vorteil hat, dass ein ausreichender Luftstrom die Wabenkammern durchströmt und auch die von der Seitenkante der Leichtbauplatte aus gesehen hinteren Wabenkammern ohne weiteres, insbesondere ohne Beschädigung der vorderen Wabenkammern, erreicht. Die Gesamtquerschnittsfläche aller Durchbrechungen einer Wand liegt in einem Bereich von 5 bis 50%, bevorzugt von 10 bis 40%, besonders bevorzugt von 15 bis 30%, bezogen auf die Gesamtfläche der Wand. Als besonders geeignet hat sich erwiesen, wenn das Verhältnis zwischen der Gesamtquerschnittsfläche aller Durchbrechungen, durch die der Luftstrom unmittelbar von der Seitenkante der Leichtbauplatte in die bezogen auf die Querrichtung jeweils erste Wabenkammer, bzw. von dort in die jeweils dahinterliegende Wabenkammer, gelangt, und der Querschnittsfläche des Teils der Seitenkante zwischen den Deckplatten mindestens 1:20, bevorzugt mindestens 1:10, besonders bevorzugt mindestens 1:5, beträgt.

Schließlich ist gemäß einer weiteren Ausgestaltung vorgesehen, dass die Durchbrechungen in einer solchen Anzahl und Anordnung in jeder Wabenkammer vorgesehen sind, dass der Luftstrom, insbesondere quer zur Längsrichtung oder im stumpfen Winkel zur Längrichtung, von einer bezogen auf die Querrichtung vorderen Wabenkammer nur in eine einzige dazu benachbarte und bezogen auf die Querrichtung dahinter angeordnete bzw. in einer dahinterliegenden Reihge angeordnete Wabenkammer gelangen kann. Die Durchbrechungen sind demnach so angeordnet, dass nur ein Luftstrom senkrecht zur Seitenkante der Platte erfolgen kann. Es werden also mehrere Einzelluftströme, die nicht miteinander in Kontakt kommen, durch die Platte geführt. Bei Sechseckwaben würden die Einzelluftströme vorzugsweise, da jeder Einzelluftstrom nur in eine, bevorzugt in eine der seitlich versetzten, der drei in Querrichtung benachbarten Waben geführt wird, jeweils einen zickzackförmigen Verlauf in Querrichtung haben. Bei rechteckigen Waben oder Waben, die in Querrichtung exakt hintereinander angeordnet sind, würden die Einzelluftströme dagegen einen geraden Verlauf in Querrichtung haben. Auf diese Weise wird eine Zwangsführung der in die Leichtbauplatte bzw. Mittellage einströmenden Luft in Richtung der Plattenmitte bzw. des Zentrums der Platte erreicht.

Die zuvor hergeleitete und aufgezeigte Aufgabe wird ferner gemäß einer zweiten Lehre der vorliegenden Erfindung gelöst durch ein Verfahren, insbesondere ein kontinuierliches oder getaktetes Verfahren, zur Herstellung einer Leichtbauplatte, insbesondere einer Leichtbauplatte wie sie zuvor beschrieben wurde, bei dem eine obere Deckplatte und eine untere Deckplatte aus einem Lignozellulose enthaltenden Material bereitgestellt wird, bei dem eine leichte Mittellage bereitgestellt wird, die eine Wabenstruktur aufweist, die Wabenkammern bildende Wände hat, wobei die Mittellage eine Form hat, die einen seitlichen Luftstrom durch die Wabenkammern zulässt, bei dem das Material der Mittellage gegebenenfalls mit Durchbrechungen versehen wird, so dass in zumindest einigen der die Wabenkammern begrenzenden Wände mindestens eine Durchbrechung vorgesehen ist, bei dem die Mittellage mit ihrer Oberseite mit der oberen Deckplatte und mit ihrer Unterseite mit der unteren Deckplatte unter Einsatz eines Klebemittels verklebt wird, bei dem der Schichtaufbau aus oberer Deckplatte, Mittellage und unterer Deckplatte verpresst wird und bei dem während des Verpressens ein Luftstrom durch seitliches Anströmen der Leichtbauplatte von der Seitenkante der Leichtbauplatte ins Innere der Leichtbauplatte und insbesondere von eine Wabenkammer in eine jeweils benachbarte Wabenkammer geleitet wird. Der Luftstrom braucht dabei nicht unter Druck in die Leichtbauplatte bzw. Wabenkammern eingeleitet (gepresst) werden, sondern die Wabenkammern und die gegebenenfalls vorhandenen Durchbrechungen sind ausreichend groß, dass die Seitenkante der Leichtbauplatte lediglich angeströmt werden muss.

Indem das Material der Mittellage bei einigen die Wabenkammern begrenzenden Wänden mit mindestens einer Durchbrechung je Wabenkammer versehen wird, wird erreicht, dass ein von der Seitenkante der Leichtbauplatte her eingeführter Luftstrom ins Innere der Leichtbauplatte und insbesondere von einer Wabenkammer in eine jeweils benachbarte Wabenkammer gelangen kann, wodurch die zugeführte Luft zwangsläufig auch an den Randbereich der miteinander zu verklebenden Kontaktflächen zwischen Mittellage und jeweiliger Deckplatte gelangt, so dass an diesen Stellen eine beschleunigte Aushärtung des Klebemittels herbeigeführt wird. Es sind auch Mittellagen ohne solche Durchbrechungen denkbar, die sich dennoch anströmen lassen. Diese im weiteren noch beschrieben.

Auf diese Weise kann ein vergleichsweise kostengünstiges Klebemittel verwendet werden, das bei der herkömmlichen Verklebung gemäß Stand der Technik relativ lange Aushärtezeiten zur Folge hätte. Die Presszeit kann damit deutlich verkürzt und die Produktionskapazität entsprechend erweitert werden. Das Erzeugen eines Luftstroms erfordert auch keinen besonders hohen anlagentechnischen Aufwand und kann auch bei herkömmlichen Anlagen zur Herstellung von Leichtbauplatten ohne weiteres nachgerüstet werden. Ein weiterer Vorteil ist außerdem, dass durch die beschleunigte Aushärtung auch die Qualität der Verbindung bzw. Verklebung zwischen Oberseite bzw. Unterseite der Mittellage und jeweils benachbarter Decklage gegenüber dem Stand der Technik verbessert wird.

Besonders gut lassen sich die folgenden Typen von Leichtbauplatten, die keine Durchbrechungen in der Mittellage aufweisen müssen, mit dem erfindungsgemäßen Verfahren herstellen, da eine solche Leichtbauplatte jeweils eine Mittellage aufweist, die aufgrund ihrer Form einen seitlichen Luftstrom, der also quer zur Plattenlängsrichtung und insbesondere quer zur Produktionsbewegungsrichtung von der Seitenkante zugeführt wird, durch die Wabenkammern zulässt, wodurch der Luftstrom die Klebestellen, an denen die Mittellage mit den Deckplatten und verklebt wird, optimal erreichen kann. Das Klebemittel härtet auf diese Weise besonders schnell aus.

So ist beispielsweise vorgesehen, dass die Wabenstruktur mehrere, in insbesondere gleichmäßiger Folge, nebeneinander quer zur Längsrichtung verlaufende längliche Profile, insbesondere mit U-förmigem, trapezförmigem oder wellenförmigem Querschnitt, aufweist, wobei sich die Profile vorzugsweise über die gesamte Breite der Leichtbauplatte erstrecken. Mit einem U-förmigen Profil ist ein solches gemeint, dass senkrecht zur Leichtbauplattenebene bzw. zu den Deckplatten verlaufende seitliche Wände und parallel zu den Deckplatten verlaufende und diese berührende "Decken" und "Böden" hat. Bei einem trapezförmigen Querschnitt des Profils verlaufen die "Decken" und "Böden" ebenfalls parallel zu den Deckplatten, die seitlichen Wände sind jedoch winkelig, insbesondere in einem Winkel von größer 90° relativ zu den "Decken" und "Böden", angeordnet. Solche Profile lassen sich auf einfache Weise von der Seite, also längs des Profilverlaufs, an- und durchströmen.

Bei einem anderen Beispiel ist vorgesehen, dass die Wabenstruktur mehrere Reihen von in und quer zur Längsrichtung abwechselnd nebeneinander angeordneten Vertiefungen und Ausstülpungen aufweist, wobei die Wabenstruktur in einem vertikalen Schnitt in und/oder quer zur Längsrichtung insbesondere einen U-förmigen, trapezförmigen oder wellenförmigen Verlauf hat. Eine solche Wabenstruktur wird auch als Schalentragwerk, das heißt zweifach gekrümmtes Flächentragwerk, bezeichnet und hat im Wesentlichen die Form eines Eierkartons. Bei einer solchen Wabenstruktur kann der eingeleitete Luftstrom zwischen den einzelnen Ausstülpungen hindurch in die jeweilige benachbarte Wabenkammer gelangen, ohne dass Durchbrechungen vorgesehen sein müssen.

Gemäß einer Ausgestaltung des erfindungsgemäßen Verfahrens wird der Luftstrom erwärmt bzw. hat eine erhöhte Temperatur. Dies bedeutet, dass die mit dem Luftstrom ins Innere der Leichtbauplatte geführte Luft eine höhere Temperatur als die Umgebung hat. Die Temperatur kann beispielsweise in einem Bereich von 25 bis 70°C, bevorzugt von 30 bis 60°C, besonders bevorzugt von 40 bis 50°C liegen. Auch das Erwärmen des Luftstroms erfordert keinen hohen anlagentechnischen Aufwand. Die Erwärmung der in die Leichtbauplatte gelangten Luft beschleunigt die Aushärtung um ein weiteres.

Gemäß wiederum einer weiteren Ausgestaltung des erfindungsgemäßen Verfahrens wird auch vor und/oder nach dem Verpressen ein Luftstrom von der Seitenkante der Leichtbauplatte ins Innere der Leichtbauplatte geleitet. Auch auf diese Weise läßt sich die Aushärtung beschleunigen und die Presszeit reduzieren.

Es sind verschiedene Möglichkeiten denkbar, den Luftstrom in die Leichtbauplatte bzw. die Wabenstruktur einzuleiten. Gemäß einer Ausgestaltung wird der Luftstrom quer zur Produktionsbewegungsrichtung in die Mittellage geleitet. In diesem Fall kann also seitlich, bevorzugt zu beiden Seiten, der Transporteinrichtung, insbesondere einer kontinuierlich arbeitenden Vorrichtung zur Herstellung einer Leichtbauplatte, eine entsprechende Einrichtung zur Erzeugung und gegebenenfalls Erwärmung des Luftstroms angeordnet sein, die dann seitlich den Luftstrom zuführt. Zusätzlich oder alternativ kann der Luftstrom aber auch mit geeigneten Einrichtungen in Produktionsbewegungsrichtung oder winkelig zur Produktionsbewegungsrichtung zugeführt werden.

Die Aufgabe wird ferner gemäß einer dritten Lehre der vorliegenden Erfindung gelöst durch die Verwendung einer zwischen einer oberen Deckplatte und einer unteren Deckplatte, die aus einem Lignozellulose enthaltenden Material bestehen, in einer Längsrichtung verlaufenden leichten Mittellage, die eine Wabenstruktur aufweist, die Wabenkammern bildende Wände hat, wobei die Mittellage eine Form hat, die einen seitlichen Luftstrom durch die Wabenkammern zulässt zum Einleiten eines Luftstroms durch seitliches Anströmen der Leichtbauplatte von außerhalb in zumindest einige der Wabenkammern, wobei in zumindest einigen der die Wabenkammern begrenzenden Wände mindestens eine Durchbrechung vorgesehen ist.

Schließlich wird die Aufgabe gemäß einer vierten Lehre der vorliegenden Erfindung gelöst durch die Verwendung einer zwischen einer oberen Deckplatte und einer unteren Deckplatte, die aus einem Lignozellulose enthaltenden Material bestehen, in einer Längsrichtung verlaufenden leichten Mittellage, die eine Wabenstruktur aufweist, die Wabenkammern bildende Wände hat, wobei in zumindest einigen der die Wabenkammern begrenzenden Wände mindestens eine Durchbrechung vorgesehen ist, zum Beschleunigen der Aushärtung eines Klebemittels zwischen der Mittellage und der jeweiligen Deckplatte.

Es gibt nun eine Vielzahl von Möglichkeiten, die erfindungsgemäße Leichtbauplatte und das erfindungsgemäße Verfahren auszugestalten und weiterzubilden. Hierzu wird einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: ein Beispiel einer Leichtbauplatte, wie sie optimal durch das erfindungsgemäße Verfahren herstellbar ist,
- Fig. 2: ein weiteres Beispiel einer Leichtbauplatte, wie sie optimal durch das erfindungsgemäße Verfahren herstellbar ist, und
- Fig. 3: ein Ausführungsbeispiel einer Leichtbauplatte gemäß der vorliegenden Erfindung.

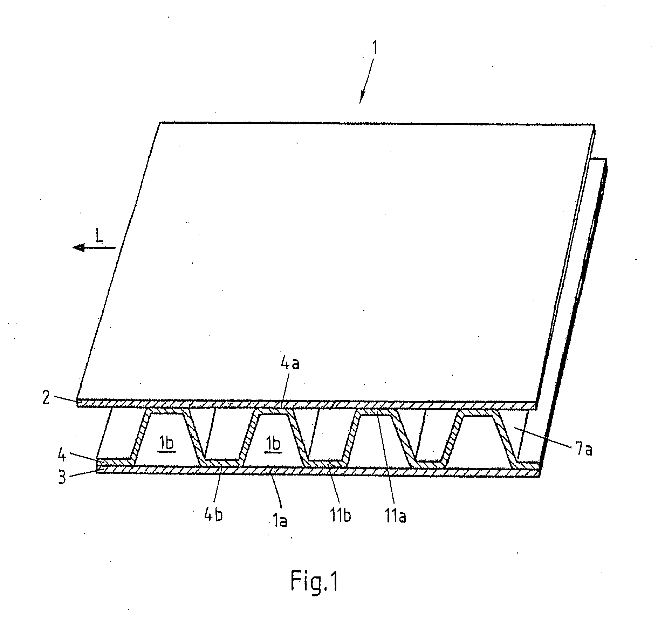

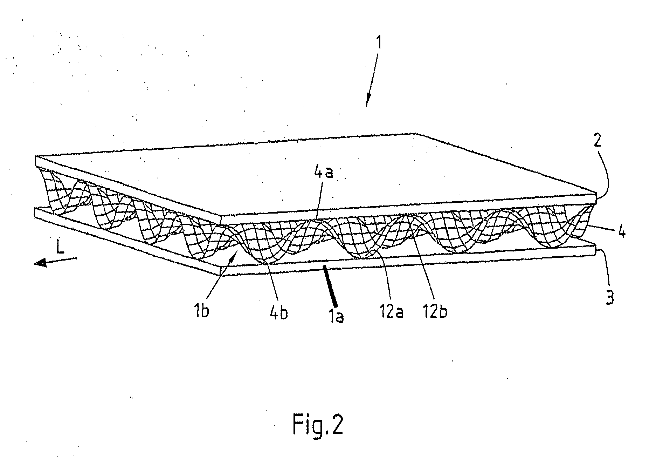

Die Leichtbauplatte 1 gemäß den Figuren 1 und 2 eignet sich besonders, um durch das erfindungsgemäße Verfahren hergestellt zu werden. Die Leichtbauplatte 1 weist jeweils eine Mittellage 4 auf, die aufgrund ihrer Form einen seitlichen Luftstrom, der also quer zur Plattenlängsrichtung L und quer zur Produktionsbewegungsrichtung von der Seitenkante 1a zugeführt wird, durch die Wabenkammern 6 zulässt, wodurch der Luftstrom die Klebestellen, an denen die Mittellage 4 mit den Deckplatten 2 und 3 verklebt ist/wird, optimal erreichen kann. Das Klebemittel härtet auf diese Weise besonders schnell aus.

Die Leichtbauplatte 1 erstreckt sich in einer Längsrichtung L und weist eine obere Deckplatte 2 und eine untere Deckplatte 3 aus einem Holzwerkstoff, hier einer Spanplatte, auf, wobei sich auch beide Deckplatten 2 und 3 in Längsrichtung L erstrecken. Die Leichtbauplatte 1 umfasst ferner eine zwischen der oberen Deckplatte 2 und der unteren Deckplatte 3 in Längsrichtung L verlaufende leichte Mittellage 4, die eine Wabenstruktur aufweist.

Die Mittellage 4 ist mit ihrer Oberseite 4a mit der oberen Deckplatte 2 und mit ihrer Unterseite 4b mit der unteren Deckplatte 3 unter Einsatz eines Klebemittels verklebt. Bei seitlicher Zuführung (d.h. quer zur Längsrichtung L) des Luftstroms wird auf einfache Weise eine beschleunigte Aushärtung des Klebemittels erreicht.

Ein anderes Beispiel einer Leichtbauplatte 1, die sich besonders eignet, um durch das erfindungsgemäße Verfahren hergestellt zu werden, ist in Fig. 2 dargestellt. Im Unterschied zu dem vorangehenden Ausführungsbeispiel ist hier die Wabenstruktur der Mittellage 4 als Schalentragwerk ausgebildet, das heißt die Wabenstruktur weist, von oben gesehen, mehrere Reihen von in Längsrichtung L und quer zur Längsrichtung L abwechselnd nebeneinander angeordnete Vertiefungen 12a und Ausstülpungen 12b auf, wobei die Wabenstruktur 5 in einem vertikalen Schnitt sowohl in als auch quer zur Längsrichtung L einen wellenförmigen Verlauf hat. Denkbar ist auch in einer alternativen Ausgestaltung ein im vertikalen Schnitt U-förmiger oder trapezförmiger Verlauf.

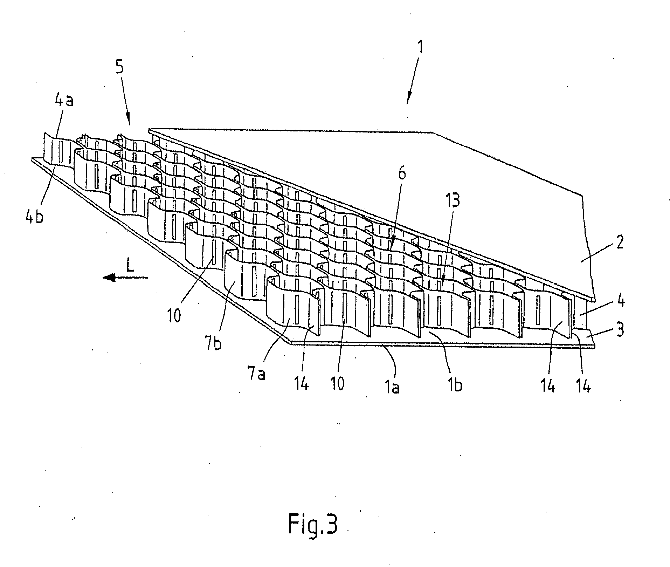

Eine Ausgestaltung einer Leichtbauplatte 1, die ebenfalls geeignet ist, durch das erfindungsgemäße Verfahren hergestellt zu werden, zeigt Fig. 3.

Hier ist schematisch eine Leichtbauplatte 1 dargestellt, bei der die Wabenstruktur 5 Sechseckwaben 13 mit senkrechten Wänden 7a und 7b aufweist, deren Stirnkanten an der oberen Deckplatte 2 bzw. unteren Deckplatte 3 zur Anlage kommen. Eine solche auch als Bienenwabenstruktur bezeichnete Wabenstruktur 5 besteht aus mehreren die Wände 7a und 7b bildenden Materialstreifen 14, die, wie Fig. 3 zeigt, punktweise und versetzt miteinander verklebt sind, wobei sich benachbarte Materialstreifen 14 nur an den miteinander verklebten Wänden 7b berühren. In diesem Fall weisen die Wände 7b, mit denen die Materialstreifen 14 mit einem benachbarten Materialstreifen 14 verklebt sind, keine Durchbrechungen auf. Die Durchbrechungen 10 sind in diesem Ausführungsbeispiel nur in den Wänden 7a vorgesehen, welche nicht mit einem anderen Materialstreifen verklebt sind.

Fig. 3 zeigt auch deutlich, dass in dem dargestellten Ausführungsbeispiel einige Wabenkammern 6 ausschließlich Wände 7b aufweisen, die frei von Durchbrechungen sind.

Bei der Sechseckwabenstruktur 5, welche in Fig. 3 gezeigt ist, ist ferner vorgesehen, dass der linke Materialstreifen, der also der linken Stirnkante der Leichtbauplatte 1 am nächsten liegt, nur in den winkelig zur vorderen Seitenkante 1a verlaufenden Wänden 7a Durchbrechungen 10 aufweist, nicht aber in den senkrecht zur Seitenkante 1a verlaufenden Wänden 7b. Auf diese Weise muss bei der Herstellung der Mittellage 4 nur eine einzige Art von Materialstreifen 14 mit Durchbrechungen und nur eine einzige Art von Materialstreifen 14 ohne Durchbrechungen hergestellt werden.

Die Durchbrechungen 10 der Mittellage 4 gemäß Fig. 3 sind hier rechteckig, nämlich schlitzförmig, im Querschnitt ausgebildet und verlaufen vertikal. Es sind aber auch Durchbrechungen in anderen Formen, beispielsweise runde oder elliptische, und anderen Ausrichtungen, beispielsweise mit horizontalem Verlauf, denkbar.

Bei dem vorangehend beschriebenen Ausführungsbeispiel ist die Querschnittsfläche, insbesondere die Größe des Querschnitts, einer jeden Durchbrechung so gewählt, dass die Durchbrechungen einen von außerhalb der Leichtbauplatte quer zur Längsrichtung L zugeführten Luftstrom von der Seitenkante 1a der Leichtbauplatte 1 ins Innere 1b und auch von einer Wabenkammer 6 in eine jeweils benachbarte Wabenkammer 6 zulassen. Dieser Luftstrom wird sowohl während der Herstellung der Leichtbauplatte 1 im Zustand der maximalen Verpressung, also wenn der höchste Druck auf dem Schichtaufbau lastet, als auch nach dem Durchlaufen einer entsprechenden Presseinrichtung zugelassen.

## Patentansprüche

1. Leichtbauplatte (1), die sich in einer Längsrichtung (L) erstreckt,
- mit einer oberen Deckplatte (2) und einer unteren Deckplatte (3) aus einem Lignozellulose enthaltenden Material, die beide in Längsrichtung (L) verlaufen,
- mit einer zwischen der oberen Deckplatte (2) und der unteren Deckplatte (3) in Längsrichtung (L) verlaufenden leichten Mittellage (4) aus verpressten Holzpartikeln oder Karton, die eine Wabenstruktur (5) aufweist, die Wabenkammern (6) bildende Wände (7a,7b) hat,
wobei die Mittellage (4) mit ihrer Oberseite (4a) mit der oberen Deckplatte (2) und mit ihrer Unterseite (4b) mit der unteren Deckplatte (3) unter Einsatz eines Klebemittels verklebt ist,
**dadurch gekennzeichnet, dass** in zumindest einigen der die Wabenkammer (6) begrenzenden Wände (7a,7b) mindestens eine Durchbrechung (10) vorgesehen ist, deren Querschnittsfläche so konfiguriert ist, dass die Durchbrechungen (10) einen durch seitliches Anströmen der Leichtbauplatte (1) von außerhalb der Leichtbauplatte zugeführten Luftstrom, insbesondere quer zur Längsrichtung (L), von einer Seitenkante (1a) der Leichtbauplatte (1) ins Innere (1b) der Leichtbauplatte (1) zulassen, wobei die Gesamtquerschnittsfläche aller Durchbrechungen (10) einer Wand (7a) in einem Bereich von 5 bis 50% bezogen auf die Gesamtfläche der Wand (7a) liegt.

2. Leichtbauplatte (1) nach Anspruch 1, **dadurch gekennzeichnet, dass** in den die mindestens eine Durchbrechung (10) aufweisenden Wänden mehrere Durchbrechungen (10) vorgesehen sind, deren Querschnittsfläche so konfiguriert ist, dass die Durchbrechungen (10) einen von außerhalb der Leichtbauplatte zugeführten Luftstrom, insbesondere quer zur Längsrichtung (L), von einer Seitenkante (1a) der Leichtbauplatte (1) ins Innere (1b) der Leichtbauplatte (1) zulassen.

3. Leichtbauplatte (1) nach Anspruch 1 oder 2, **dadurch gekennzeichnet, dass** die Durchbrechungen (10) einen von außerhalb der Leichtbauplatte (1) zugeführten Luftstrom, insbesondere quer zur Längsrichtung (L), von einer Waben kammer (6) in eine jeweils benachbarte Wabenkammer (6) zulassen.

4. Leichtbauplatte (1) nach einem der vorangehenden Ansprüche, **dadurch gekennzeichnet, dass** die Querschnittsfläche der mindestens einen Durchbrechung (10) so konfiguriert ist, dass die Durchbrechungen (10) den Luftstrom auch im Zustand der maximalen Verpressung während des verpressens des Schichtaufbaus aus oberer Deckplatte (2), Mittellage (4) und unterer Deckplatte (3) zulassen.

5. Leichtbauplatte (1) nach einem der vorangehenden Ansprüche, **dadurch gekennzeichnet, dass** einige Wände (7b) von Wabenkammern (6), die eine mindestens eine Durchbrechung (10) aufweisende Wand (7a) aufweisen, frei von Durchbrechungen sind.

6. Leichtbauplatte (1) nach einem der vorangehenden Ansprüche, **dadurch gekennzeichnet, dass** einige Wabenkammern (6) ausschließlich Wände (7b) aufweisen, die frei von Durchbrechungen sind, wobei insbesondere die Wabenkammern (6), die Wände (7a) mit mindestens einer Durchbrechung aufweisen, im Randbereich der Leichtbauplatte (1) und die Wabenkammern (6), die ausschließlich Wände (7b) ohne Durchbrechungen aufweisen, außerhalb des Randbereichs, insbesondere im Zentrum, der Leichtbauplatte (1) bezogen auf die Richtung quer zur Längsrichtung (L), angeordnet sind.

7. Leichtbauplatte (1) nach einem der Ansprüche 1 bis 6, **dadurch gekennzeichnet, dass** die Wabenstruktur (5) Sechseckwaben (13) mit senkrechten Wänden (7a,7b), deren Stirnkanten an der oberen Deckplatte (2) bzw. unteren Deckplatte (3) zur Anlage kommen, aufweist, wobei die Wabenstruktur (5) bevorzugt aus mehreren die Wände (7a,7b) bildenden Materialstreifen (14) besteht, die punktweise miteinander und versetzt zueinander verklebt sind, wobei sich benachbarte Materialstreifen (14) nur an den miteinander verklebten Wänden (7a,7b) berühren, wobei die Wände (7b), mit denen die Materialstreifen (14) mit einem benachbarten Materialstreifen (14) verklebt sind, insbesondere keine Durchbrechung aufweisen.

8. Leichtbauplatte (1) nach einem der vorangehenden Ansprüche, **dadurch gekennzeichnet, dass** in den mindestens eine Durchbrechung (10) aufweisenden Wänden (7a) entweder mindestens eine obere Durchbrechung (10), die nahe der Oberseite (4a) der Mittellage (4) angeordnet ist, oder mindestens eine untere Durchbrechung (10), die nahe der Unterseite (4b) der Mittellage (4) angeordnet ist, vorgesehen ist, wobei sich insbesondere in benachbarten Wänden (7a) und/oder Wabenkammern (6) obere Durchbrechungen (10) und untere Durchbrechungen (10) jeweils abwechseln.

9. Leichtbauplatte (1) nach einem der vorangehenden Ansprüche, **dadurch gekennzeichnet, dass** die Durchbrechungen (10) einen gebogenen, insbesondere runden oder elliptischen, oder einen eckigen, insbesondere schlitzförmigen, Querschnitt haben.

10. Leichtbauplatte (1) nach einem der vorangehenden Ansprüche, **dadurch gekennzeichnet, dass** die Gesamtquerschnittsfläche aller Durchbrechungen (10) einer Wand (7a) höchstens 30%, bevorzugt höchstens 20%, besonders bevorzugt höchstens 10%, und/oder mindestens 1%, bevorzugt mindestens 2%, besonders bevorzugt mindestens 5%, der Gesamtfläche der Wand (7a) einnimmt.

11. Leichtbauplatte (1) nach einem der vorangehenden Ansprüche, **dadurch gekennzeichnet, dass** das Verhältnis zwischen der Gesamtquerschnittsfläche aller Durchbrechungen (10), durch die der Luftstrom unmittelbar von der Seitenkante (1a) der Leichtbauplatte (1) in die bezogen auf die Richtung quer zur Längsrichtung (L) jeweils erste Wabenkammer (6) gelangt, und der Querschnittsfläche des Teils der Seitenkante (1a) zwischen den Deckplatten (2,3) mindestens 1:20, bevorzugt mindestens 1:10, besonders bevorzugt mindestens 1:5, beträgt.

12. Leichtbauplatte (1) nach einem der vorangehenden Ansprüche, **dadurch gekennzeichnet, dass** die Durchbrechungen (10) in einer solchen Anzahl und Anordnung in jeder Wabenkammer (6) vorgesehen sind, dass der Luftstrom, insbesondere quer zur Längsrichtung (L), von einer bezogen auf die Richtung quer zur Längsrichtung (L) vorderen Wabenkammer (6) nur in eine einzige dazu benachbarte und bezogen auf die Richtung quer zur Längsrichtung (L) dahinter angeordneten Wabenkammer (6) gelangen kann.

13. Verfahren zur Herstellung einer Leichtbauplatte (1), insbesondere einer Leichtbauplatte (1) nach einem der vorangehenden Ansprüche,
- bei dem eine obere Deckplatte (2) und eine untere Deckplatte (3) aus einem Lignozellulose enthaltenden Material bereitgestellt wird,
- bei dem eine leichte Mittellage (4) bereitgestellt wird, die eine Wabenstruktur (5) aufweist, die Wabenkammern (6) bildende Wände (7a,7b) hat, wobei die Mittellage (4) eine Form hat, die einen seitlichen Luftstrom durch die Wabenkammern (6) zulässt,
- bei dem die Mittellage (4) mit ihrer Oberseite (4a) mit der oberen Deckplatte (2) und mit ihrer Unterseite (4b) mit der unteren Deckplatte (3) unter Einsatz eines Klebemittels verklebt wird,
- bei dem der Schichtaufbau aus oberer Deckplatte (2), Mittellage (4) und unterer Deckplatte (3) verpresst wird und
- bei dem während des Verpressens ein Luftstrom durch seitliches Anströmen der Leichtbauplatte (1) von der Seitenkante (1a) der Leichtbauplatte (1) ins Innere (1b) der Leichtbauplatte (1) geleitet wird.

14. Verfahren nach Anspruch 13, **dadurch gekennzeichnet, dass** vor und/oder nach dem Verpressen ein Luftstrom von der Seitenkante (1a) der Leichtbauplatte (1) ins Innere (1b) der Leichtbauplatte (1) geleitet wird.

15. Verfahren nach Anspruch 13 oder 14, **dadurch gekennzeichnet, dass** der Luftstrom eine erhöhte Temperatur hat.

16. Verfahren nach einem der Ansprüche 13 bis 15, **dadurch gekennzeichnet, dass** der Luftstrom quer zur Produktionsbewegungsrichtung in die Mittellage (4) geleitet wird.

17. Verfahren nach einem der Ansprüche 13 bis 16, **dadurch gekennzeichnet, dass** das Material der Mittellage (4) mit Durchbrechungen (10) versehen wird, so dass in zumindest einigen der die Wabenkammern (6) begrenzenden Wände (7a,7b) mindestens eine Durchbrechung (10) vorgesehen ist.

18. Verwendung einer zwischen einer oberen Deckplatte (2) und einer unteren Deckplatte (3), die aus einem Lignozellulose enthaltenden Material bestehen, in einer Längsrichtung (L) verlaufenden leichten Mittellage (4), die eine Wabenstruktur (5) aufweist, die Wabenkammern (6) bildende Wände (7a,7b) hat, wobei die Mittellage (4) eine Form hat, die einen seitlichen Luftstrom durch die Wabenkammern (6) zulässt zum Einleiten eines Luftstroms durch seitliches Anströmen der Leichtbauplatte (1) von außerhalb in zumindest einige der Wabenkammern (6), wobei in zumindest einigen der die Wabenkammern (6) begrenzenden Wände (7a,7b) insbesondere mindestens eine Durchbrechung (10) vorgesehen ist.

## Claims

1. A lightweight board (1), which extends in a longitudinal direction (L),
- having an upper covering board (2) and a lower covering board (3) consisting of a lignocellulose-containing material, which both run in the longitudinal direction (L),
- having a light middle layer (4), which runs in the longitudinal direction (L) between the upper covering board (2) and the lower covering board (3), consists of compressed wood particles or cardboard, and has a honeycomb structure (5) having walls (7a, 7b) that form honeycomb chambers (6),
the middle layer (4) being bonded with its upper side (4a) to the upper covering board (2) and with its underside (4b) to the lower covering board (3) using an adhesive,
**characterised in that** at least one hole (10) is provided in at least some of the walls (7a, 7b) bounding the honeycomb chambers (6), the cross-sectional area of which hole is configured in such a manner that the holes (10) allow an air flow that is supplied by means of a laterally approaching flow to the lightweight board (1) from outside the lightweight board, in particular transversely to the longitudinal direction (L), from one side edge (1a) of the lightweight board (1) into the interior (1b) of the lightweight board (1), wherein the total cross-sectional area of all the holes (10) in a wall (7a) is in a range from 5 to 50% in relation to the total area of the wall (7a).

2. The lightweight board (1) according to claim 1, **characterised in that** a plurality of holes (10) is provided in the walls having the at least one hole (10), the cross-sectional area of which holes is configured in such a manner that the holes (10) allow an air flow supplied from outside the lightweight board, in particular transversely to the longitudinal direction (L), from one side edge (1a) of the lightweight board (1) into the interior (1b) of the lightweight board (1).

3. The lightweight board (1) according to claim 1 or 2, **characterised in that** the holes (10) allow an air flow supplied from outside the lightweight board (1), in particular transversely to the longitudinale direction (L), from one honeycomb chamber (6) into a respectively adjacent honeycomb chamber (6).

4. The lightweight board (1) according to any one of the preceding claims, **characterised in that** the cross-sectional area of the at least one hole (10) is configured in such a manner that the holes (10) allow the air flow even in a state of maximum compression during the compression of the layer structure consisting of upper covering board (2), middle layer (4) and lower covering board (3).

5. The lightweight board (1) according to any one of the preceding claims, **characterised in that** some walls (7b) of honeycomb chambers (6) that have a wall (7a) having at least one hole (10) are free of holes.

6. The lightweight board (1) according to any one of the preceding claims, **characterised in that** some honeycomb chambers (6) only have walls (7b) that are free of holes, wherein in particular the honeycomb chambers (6) that have walls (7a) with at least one hole are arranged in the edge region of the lightweight board (1), and the honeycomb chambers (6) that only have walls (7b) without holes are arranged outside the edge region, in particular in the centre, of the lightweight board (1) in relation to the direction transverse to the longitudinal direction (L).

7. The lightweight board (1) according to any one of claims 1 to 6, **characterised in that** the honeycomb structure (5) has hexagonal honeycombs (13) with perpendicular walls (7a, 7b), the end edges of which come to bear against the upper covering board (2) and/or lower covering board (3), wherein the honeycomb structure (5) preferably consists of a plurality of material strips (14), which form the walls (7a, 7b) and are adhesively bonded to each other at points and offset from each other, wherein adjacent material strips (14) only touch each other at the walls (7a, 7b) that are adhesively bonded to each other, wherein the walls (7b) with which the material strips (14) are adhesively bonded to an adjacent material strip (14) in particular do not have any holes.

8. The lightweight board (1) according to any one of the preceding claims, **characterised in that** either at least one upper hole (10), which is arranged close to the upper side (4a) of the middle layer (4), or at least one lower hole (10), which is arranged close to the underside (4b) of the middle layer (4), is provided in the walls (7a) having at least one hole (10), wherein upper holes (10) and lower holes (10) in particular alternate in adjacent walls (7a) and/or honeycomb chambers (6).

9. The lightweight board (1) according to any one of the preceding claims, **characterised in that** the holes (10) have a curved, in particular round or elliptical, or angled, in particular slot-shaped, cross section.

10. The lightweight board (1) according to any one of the preceding claims, **characterised in that** the total cross-sectional area of all the holes (10) in a wall (7a) takes up no more than 30%, preferably no more than 20%, particularly preferably no more than 10%, and/or at least 1%, preferably at least 2%, particularly preferably at least 5% of the total area of the wall (7a).

11. The lightweight board (1) according to any one of the preceding claims, **characterised in that** the ratio between the total cross-sectional area of all the holes (10) through which the air flow passes directly from the side edge (1a) of the lightweight board (1) into the respectively first honeycomb chamber (6) in relation to the direction transverse to the longitudinal direction (L), and the cross-sectional area of the part of the side edge (1a) between the covering boards (2, 3) is at least 1:20, preferably at least 1:10, particularly preferably at least 1:5.

12. The lightweight board (1) according to any one of the preceding claims, **characterised in that** the holes (10) are provided in each honeycomb chamber (6) in such a number and arrangement that the air flow can only pass, in particular transversely to the longitudinal direction (L), from a front honeycomb chamber (6) in relation to the direction transverse to the longitudinal direction (L) into only one adjacent honeycomb chamber (6) arranged behind it in relation to the direction transverse to the longitudinal direction (L).

13. A method for producing a lightweight board (1), in particular a lightweight board (1) according to any one of the preceding claims,
- in which an upper covering board (2) and a lower covering board (3) consisting of a lignocellulose-containing material are provided,
- in which a light middle layer (4) is provided, which has a honeycomb structure (5), which has walls (7a, 7b) that form honeycomb chambers (6), wherein the middle layer (4) has a shape that allows a lateral air flow through the honeycomb chambers (6),
- in which the middle layer (4) is bonded with its upper side (4a) to the upper covering board (2) and with its underside (4b) to the lower covering board (3) using an adhesive,
- in which the layer structure consisting of upper covering board (2), middle layer (4) and lower covering board (3) is compressed, and
- in which an air flow is conducted by means of a laterally approaching flow to the lightweight board (1) from the side edge (1a) of the lightweight board (1) into the interior (1b) of the lightweight board (1) during compression.

14. The method according to claim 13, **characterised in that** an air flow is conducted from the side edge (1a) of the lightweight board (1) into the interior (1b) of the lightweight board (1) before and/or after compression.

15. The method according to claim 13 or 14, **characterised in that** the air flow has an elevated temperature.

16. The method according to any one of claims 13 to 15, **characterised in that** the air flow is conducted into the middle layer (4) transversely to the production movement direction.

17. The method according to any one of claims 13 to 16, **characterised in that** the material of the middle layer (4) is provided with holes (10) so that at least one hole (10) is provided in at least some of the walls (7a, 7b) bounding the honeycomb chambers (6).

18. A use of a light middle layer (4), which runs in a longitudinal direction (L) between an upper covering board (2) and a lower covering board (3) consisting of a lignocellulose-containing material, and has a honeycomb structure (5) having walls (7a, 7b) that form honeycomb chambers (6), wherein the middle layer (4) has a shape that allows a lateral air flow through the honeycomb chambers (6) to conduct an air flow by means of a laterally approaching flow to the lightweight board (1) from outside into at least some of the honeycomb chambers (6), wherein in particular at least one hole (10) is provided in at least some of the walls (7a, 7b) bounding the honeycomb chambers (6).

## Revendications

1. Panneau alvéolaire alvéolaire (1) s'étendant dans une direction longitudinale (L),
- avec un panneau de couverture supérieur (2) et un panneau de couverture inférieur (3) constitués d'un matériau contenant de la lignocellulose et s'étendant tous deux dans la direction longitudinale (L),
- avec une couche intermédiaire légère (4) s'étendant dans la direction longitudinale (L), entre le panneau de couverture supérieur (2) et le panneau de couverture inférieur (3) constitué de particule de bois pressées ou de carton, présentant une structure alvéolaire (5) possédant des parois (7a, 7b) formant les chambres alvéolaires (6),
dans lequel la couche intermédiaire (4) est collée avec sa face supérieure (4a) au panneau de couverture supérieur (2) et avec sa face inférieure (4b) au panneau de couverture inférieur (3), à l'aide d'un agent adhésif,
**caractérisé en ce que** dans au moins quelques unes des parois (7a, 7b) délimitant les chambres alvéolaires (6), il est prévu au moins une perforation (10) dont l'aire de section transversale est configurée de manière à ce que les perforations (10) permettant le passage d'un flux d'air alimenté par un soufflage latéral sur le panneau alvéolaire (1) depuis l'extérieur du panneau alvéolaire (1), en particulier perpendiculairement à la direction longitudinale (L), d'un bord latéral (1a) du panneau alvéolaire (1) vers l'intérieur (1b) du panneau alvéolaire (1), sachant que l'aire de section transversale totale de toutes les perforations (10) d'une paroi (7a) représente entre 5 et 50% de la surface totale de la paroi (7a).

2. Panneau alvéolaire (1) selon la revendication 1, **caractérisé en ce que** dans les parois comportant la au moins une perforation (10), il est prévu plusieurs perforations (10) dont l'aire de section transversale est configurée de manière à ce que les perforations (10) permettent le passage d'un flux d'air alimenté par l'extérieur du panneau alvéolaire, en particulier aigrement à la direction longitudinale (L), d'un bord latéral (1a) du panneau alvéolaire (1) vers l'intérieur (1b) du panneau alvéolaire (1).

3. Panneau alvéolaire (1) selon la revendication 1 ou 2, **caractérisé en ce que** les perforations (10) permettent le passage d'un flux d'air alimenté par l'extérieur du panneau alvéolaire (1), en particulier perpendiculairement à la direction longitudinale (L), d'une chambre alvéolaire (6) vers une chambre alvéolaire (6) respectivement adjacente.

4. Panneau alvéolaire (1) selon l'une des revendications précédentes, **caractérisé en ce que** l'aire de section transversale de l'au moins une perforation (10) est configurée de manière à ce que les perforations (10) permettent le passage du flux d'air également dans l'état de pressage maximal pendant le pressage de la structure en couches constituée du panneau de couverture supérieur (2), de la couche intermédiaire (4) et du panneau de couverture inférieur (3).

5. Panneau alvéolaire (1) selon l'une des revendications précédentes, **caractérisé en ce que** quelques parois (7b) de chambres alvéolaires (6) comportant une paroi (7a) présentant au moins une perforation (10) sont exemptes de perforations.

6. Panneau alvéolaire (1) selon l'une des revendications précédentes, **caractérisé en ce que** quelques chambres alvéolaires (6) comportent exclusivement des parois (7b) exemptes de perforations, sachant qu'en particulier les chambres alvéolaires (6) comportant des parois (7a) avec au moins une perforation sont agencées dans la région de bord du panneau alvéolaire (1), et les chambres alvéolaires (6) comportant exclusivement des parois (7b) sans perforations sont agencées à l'extérieur de la région de bord, en particulier au centre, du panneau alvéolaire (1) perpendiculairement à la direction longitudinale (L).

7. Panneau alvéolaire (1) selon l'une des revendications 1 à 6, **caractérisé en ce que** la structure alvéolaire (5) comporte des alvéoles hexagonales (13) avec des parois verticales (7a, 7b) dont les arêtes frontales s'appliquent sur le panneau de couverture supérieur (2) et/ou sur le panneau de couverture inférieur (3), dans lequel la structure alvéolaire (5) est constituée de préférence de plusieurs bandes de matériau (14) formant les parois (7a, 7b), lesquelles sont collées par points les unes aux autres et décalées les unes par rapport aux autres, dans lequel des bandes de matériau (14) voisines ne se touchent qu'au niveau des parois (7a, 7b) collées les unes aux autres, dans lequel les parois (7b) par lesquelles les bandes de matériau (14) sont collées à une bande de matériau voisine (14) ne comportent pas de perforation.

8. Panneau alvéolaire (1) selon l'une des revendications précédentes, **caractérisé en ce que** dans les parois (7a) comportant au moins une perforation (10), il est prévu soit au moins une perforation supérieure (10) agencée à proximité de la face supérieure (4a) de la couche intermédiaire (4), soit au moins une perforation inférieure (10) agencée à proximité de la face inférieure (4b) de la couche intermédiaire (4), sachant que des perforations supérieures (10) et des perforations inférieures (10) s'alternent respectivement, en particulier dans des parois (7a) et/ou des chambres alvéolaires (6) voisines.

9. Panneau alvéolaire (1) selon l'une des revendications précédentes, **caractérisé en ce que** les perforations (10) présentent une section transversale courbe, en particulier ronde ou elliptique, ou une section transversale polygonale, en particulier en forme de fente.

10. Panneau alvéolaire (1) selon l'une des revendications précédentes, **caractérisé en ce que** l'aire de section transversale totale de toutes les perforations (10) d'une paroi (7a) représente au maximum 30%, de préférence au maximum 20%, et de façon particulièrement préférentielle au maximum 10%, et/ou au moins 1%, de préférence au moins 2%, de façon particulièrement préférentielle au moins 5% de la surface totale de la paroi (7a).

11. Panneau alvéolaire (1) selon l'une des revendications précédentes, **caractérisé en ce que** le rapport entre l'aire de section transversale totale de toutes les perforations (10) à travers lesquelles le flux d'air peut arriver directement depuis le bord latéral (1a) du panneau alvéolaire (1) vers la première chambre alvéolaire (6) perpendiculairement à la direction longitudinale (L), et l'aire de section transversale de la partie du bord lateral (1a) entre les panneaux de couverture (2, 3), est d'au moins 1:20, de préférence d'au moins 1:10, de façon particulièrement préférentielle d'au moins 1:5.

12. Panneau alvéolaire (1) selon l'une des revendications précédentes, **caractérisé en ce que** dans chaque chambre alvéolaire (6), il est prévu un nombre et une configuration de perforations (10) faisant que le flux d'air, en particulier perpendiculairement à la direction longitudinale (L), venant d'une chambre alvéolaire (6) avant par rapport à la direction perpendiculaire à la direction longitudinale (L), ne peut parvenir que dans une seule chambre alvéolaire (6) adjacente à celle-ci et agencée derrière celle-ci, perpendiculairement à la direction longitudinale (L).

13. Procédé pour la fabrication d'un panneau alvéolaire (1), en particulier d'un panneau alvéolaire (1) selon l'une des revendications précédentes,
- dans lequel un panneau de couverture supérieur (2) et un panneau de couverture inférieur (3) constitués d'un matériau contenant de la lignocellulose sont mis à disposition,
- dans lequel une couche intermédiaire légère (4) comportant une structure alvéolaire (5) possédant des parois (7a, 7b) formant des chambres alvéolaires (6) est mise à disposition, la couche intermédiaire (4) présentant une forme permettant le passage d'un flux d'air latéral à travers les chambre alvéolaire (6),
- dans lequel la couche intermédiaire (4) est collée avec sa face supérieure (4a) au panneau de couverture supérieur (2) et avec sa face inférieure (4b) au panneau de couverture inférieur (3), à l'aide d'un agent adhésif,
- dans lequel la structure en couches constituée du panneau de couverture supérieur (2), de la couche intermédiaire (4) et du panneau de couverture inférieur (3) est pressée, et
- dans lequel un flux d'air est guidé par soufflage latéral sur le panneau alvéolaire (1), pendant le pressage, depuis le bord latéral (1a) du panneau alvéolaire (1) vers l'intérieur (1) du panneau alvéolaire (1).

14. Procédé selon la revendication 13, **caractérisé en ce que** avant et/ou après le pressage, un flux d'air est guidé depuis le bord latéral (1a) du panneau alvéolaire (1) vers l'intérieur (1b) du panneau alvéolaire (1).

15. Procédé selon la revendication 13 ou 14, **caractérisé en ce que** le flux d'air présente une température élevée.

16. Procédé selon l'une des revendications 13 à 15, **caractérisé en ce que** le flux d'air est guidé dans la couche intermédiaire (4) perpendiculairement à la direction de déplacement de production.

17. Procédé selon l'une des revendications 13 à 16, **caractérisé en ce que** le matériau de la couche intermédiaire (4) est pourvu de perforations (10), de manière à prévoir au moins une perforation (10) dans au moins quelques-unes des parois (7a, 7b) délimitant les chambres alvéolaires (6).

18. Utilisation d'une couche intermédiaire légère (4) s'étendant dans une direction longitudinale (L) entre un panneau de couverture supérieur (2) et un panneau de couverture inférieur (3) constitués d'un matériau contenant de la lignocellulose, laquelle présente une structure alvéolaire possédant des parois (7a, 7b) formant des chambres alvéolaires (6), où la couche intermédiaire (4) présente une forme permettant le passage d'un flux d'air latéral à travers les chambres alvéolaires (6), pour l'introduction d'un flux d'air par soufflage latéral sur le panneau alvéolaire (1) depuis l'extérieur vers au moins quelques-unes de chambres alvéolaires (6), sachant qu'il est prévu au moins une perforation (10) dans au moins quelques-unes des parois (7a, 7b) délimitant les chambres alvéolaires (6).
